# EUROPEAN PATENT SPECIFICATION

(11) **EP 0 991 157 B1**
(45) Date of publication and mention of the grant of the patent: **06.01.2010**
(21) Application number: 99307238.8
(22) Date of filing: 14.09.1999
(51) Int. Cl.: H02G 3/04

(54) **Lid retainer for cable trays**
Deckelhalter für Kabelbahnen
Maintien de couvercle pour canalisation de câbles

(30) Priority: 02.10.1998 GB 9821351
(43) Date of publication of application: 05.04.2000
(73) Proprietor: Electrix International Limited, Bishop Auckland, County Durham DL14 6XP (GB)
(72) Inventor: Thompson, Malcolm, Weardale, County Durham (GB)
(74) Representative: Vinsome, Rex Martin

(56) References cited:
- GB-A- 1 416 308

## Description

The present invention is a retainer for use in mounting the lid upon a lidded, elongate cable tray. The invention also includes such cable trays having lids mounted in place by means of one or more said retainers.

Cable trays are elongate trays of angular cross-section by means of which electric cables are supported and conveyed, usually in an industrial setting. It is common to provide an elongate lid for fitting to the cable tray and indeed in some contexts, for example in the food and related industries, the provision of such a lid is at least highly desirable and may be mandatory, in particular to prevent undesirable waste materials from lodging within the tray.

Such lids must be retained in place upon the cable trays at points along the length of the latter and, to that end, various forms of lid retainers have been proposed. However, presently available cable tray lid retainers suffer from various disadvantages in use.

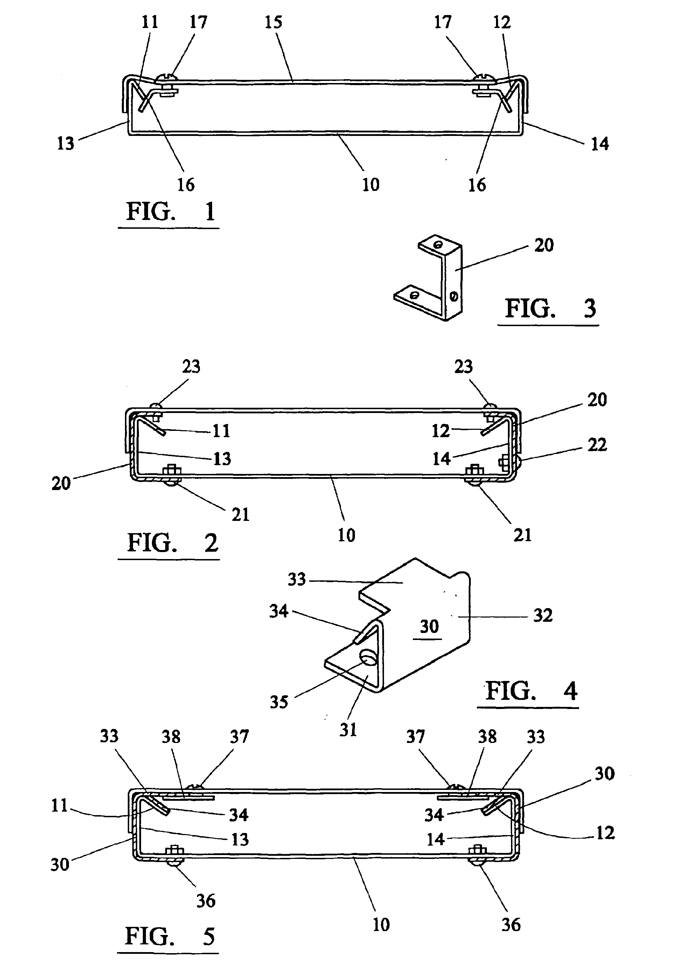

One widely-used existing method of securing such a lid in place is illustrated in Fig.1 of the accompanying drawings, which is a transverse cross-sectional view of a cable tray and lid. The cable tray 10 is of a conventional form having return flanges 11, 12 extending throughout the length of the upright sides 13, 14 of the tray. A lid 15 is placed upon the sides 13, 14 and is retained in position by cams 16 which are moved into engagement with the lower edges of the return flanges 11, 12 by means of turnbuckles 17. As seen in Fig.1, tightening of the turnbuckles 17 can readily give rise to distortion of the lid, which is not only visually undesirable but may make cleaning of the lid difficult, which is particularly undesirable when the cable tray is installed for use in the food industry.

The return flanges are an important feature of cable trays in that they convey strength to the assembly but it is the engagement of the cams 16 with the return flanges which leads to the distortion of the lid. To overcome this problem, an alternative method of fixing the lid in position has been used. That alternative method is illustrated in Fig.2 of the accompanying drawings, which is a transverse cross-sectional view of a cable tray and lid. The cable tray 10 is similar to that of Fig.1, with upright sides 13, 14 and return flanges 11, 12. A number of lid retainers 20, of which one is illustrated in perspective view in Fig.3, are distributed along the length of the cable tray 10 and secured in position by means of bolts 21, and optionally by additional bolts 22, which bolts 21 and 22 extend through holes in the cable tray 10. The lid 23 is secured by means of screws extending through the lid and engaging the lid retainers 20.

The method illustrated by means of Figs. 2 and 3 is an improvement over that of Fig.1 but entails the very difficult problem of aligning the retainers 20 with the holes already provided in the lid 23. This careful aligning of the retainers with the lid may be time-consuming, in particular where the cable trays are installed in positions where access is difficult, for example in the roof space of a factory.

Another example of relevant prior art is GB1416308. This document relates to cable trunking and is particularly although not exclusively applicable to trunking for use in floors.

There therefore remains a real need for an improved method of securing the lid to an elongate cable tray which avoids the difficulties associated with such prior methods, in particular which allows ready installation of the lid without any likely risk of distorting it. The present invention comprises a novel form of lid retainer, by means of which the desired method of securing the lid may be achieved.

According to an aspect of the present invention, there is provided a lid retainer to enable securing of a lid to an elongate cable tray, the cable tray having a base section, upright sides and return flanges the retainer comprising:
a side section and a lip extending inwardly perpendicular to said side section;
characterised in that the lid retainer is provided with a substantially flat base section;
said side section extends upwardly from an edge of said base section (31) and substantially perpendicularly to said base section (31) ;
said lip extends from an upper edge of said side section on the same side as, and generally parallel to, said base section,
the lid retainer is provided with at least one retaining flange, extending into the angle between the lip and the side section from a respective position adjacent the upper edge of the side section, and
the dimensions and shape of the base section and side section are such that the lid retainer engages the cable tray.

In practice, the base section, side section and retaining flange may closely engage the outside faces of the cable tray, while the lip provides a support for the lid, against which the lid may be secured.

In general, the length of the lid retainer is preferably greater than its lateral dimension, more preferably a small multiple of the latter. By way of example the base section and/or the lip may be of the order of 0.5 to 1.5 inches (say 1 to 4 cm) in lateral width while the overall length of the retainer and/or of the lip may be of the order of 4 to 10 inches (say 20 to 25 cm). By virtue of this overall length, the lid retainer may afford significant support for the lid and may readily be used to interconnect the adjacent ends of two aligned lengths of cable tray. Thus two such aligned lengths may be interconnected in this way and, if desired and in particular where the lengths of the tray are relatively long, the same retainers, or optionally similar retainers of shorter length, may be used to provide additional support at points between the ends of the trays.

The lateral, that is cross-sectional, widths of the lip and of the base section may be the same or different. In general, it is preferred that the lip be somewhat narrower than the base section in this transverse direction.

The lid retainers may be secured in place by means of bolts extending through the base section and through the cable tray. The lid is preferably and advantageously secured in place by means of turnbuckles which enable cams to be rotated into position beneath the lips of the lid retainers.

In general, the lid retainer according to the present invention is preferably and readily formed in a single piece, preferably by cutting and shaping from sheet metal, in particular steel. To that end the lip and the retaining flange (or two said flanges) may be of such dimensions in the direction of the length of the retainer as to equal in total the length of the retainer. Thus the flange or flanges and the lip may be cut from a single piece, being folded away from the upper edge of the side section by different respective angles. The lip extends generally parallel to the base section and the retaining flange(s) may typically extend downwardly at an angle of the order of, say, 40 to 50 degrees relative to the lip.

In another alternative form of the invention, the lid retainer according to the present invention may be formed in a continuous length by extrusion, before cutting to the desired length.

According to another aspect of the invention, there is provided a cable tray assembly comprising an elongate cable tray, at least one lid retainer as defined above mounted to the cable tray, and a lid mounted to at least one said lid retainer and having engaging means for engaging a lip of at least one said lid retainer.

The invention will now be further described with reference to the accompanying drawings, wherein Fig.4 is a perspective view of one preferred form of the lid retainer according to the present invention and Fig.5 is a cross-sectional view of a length of cable tray with a lid secured in place by means of two said retainers.

The lid retainer 30 of Fig.4, which has been formed by cutting and folding from sheet metal, comprises a base section 31, a side section 32, a lip 33 extending generally parallel to the base section 31 and two retaining flanges 34, of which only one is visible in the drawing, extending downwardly from the region of the upper edge of the side section at an angle of the order of 45 degrees to the latter. Two bolt holes 35, of which only one is visible in the drawing, are spaced apart along the length of the base section.

Fig.5 illustrates the manner in which the lid retainer 30 of Fig.4 may be used. The cable tray 10 has upright sides 13, 14 and return flanges 11, 12 as described above. Two lengths of tray are aligned in the usual way and then two lid retainers 30 are placed in position at opposite sides of the tray, each in a position which overlies the joint between the tray lengths. The lid retainers are secured in place by bolts 36 extending through the holes 35 and through corresponding holes in the base of the tray. In this way, the adjacent lengths of tray are secured together, with each of the retaining flanges 34 engaging the return flange 11 of the adjacent length of tray. The lip 33 extends across the joint between the tray lengths.

The lid 39 is now placed over the tray and, by rotation of turnbuckles 37, cams 38 are moved to engage the underside of the lips 33.

As will readily be seen, the length of the lips 33 ensures that no very careful positioning of the lid sections 39 along the length of the cable tray is necessary. The trays and lids may therefore be installed more readily and more quickly, even in positions where access is difficult, than by using the retaining methods hitherto available.

It will be appreciated by person skilled in the art that the above embodiment has been described by way of example only and not in any limitative sense, and that various alterations and modifications are possible without departure from the scope of the invention as defined by the appended claims.

## Claims

1. A lid retainer (30) to enable securing of a lid (15) to an elongate cable tray (10), the cable tray having a base section, upright sides (13, 14) and return flanges (11, 12) the retainer (30) comprising:
a side section (32) and a lip (33) extending inwardly perpendicular to said side section (32);
**characterised in that**:
the lid retainer (30) is provided with a substantially flat base section (31);
said side section (32) extends upwardly from an edge of said base section (31) and substantially perpendicularly to said base section (31);
said lip (33) extends from an upper edge of said side section (32) on the same side as, and generally parallel to, said base section (31);
the lid retainer (30) is provided with at least one retaining flange (34), extending into the angle between the lip (33) and the side section (22) from a respective position adjacent the upper edge of the side section (32); and
the dimensions and shape of the base section (31) and side section (32) are such that the lid retainer (30) engages the cable tray (10).

2. A lid retainer (30) according to claim 1, wherein the length of the lid retainer is greater than the lateral dimension thereof.

3. A lid retainer (30) according to claim 1 or 2, wherein the lip (33) is narrower than the base section (31) in a transverse direction.

4. A lid retainer (30) according to any one of the preceding claims, wherein the retainer is formed in a single piece.

5. A lid retainer (30) according to claim 4, wherein the retainer is formed by cutting and shaping from sheet metal.

6. A lid retainer (30) according to claim 4, wherein the retainer is formed in a continuous length by extrusion and cut to a desired length.

7. A cable tray assembly comprising an elongate cable tray (10), at least one lid retainer (30) according to any one of the preceding claims mounted to the cable tray, and a lid (15) mounted to at least one said lid retainer and having engaging means (38) for engaging a lip (33) of at least one said lid retainer.

8. An assembly according to claim 7, wherein the or each said lid retainer (30) in use is secured in place on the cable tray (10) by means of one or more bolts (36) extending through the base section (31) of the or each retainer and the cable tray.

9. An assembly according to claim 7 or 8, wherein the lid (15) includes one or more turnbuckles (37) having a respective cam (38) adapted to be rotated into position beneath a lip (33) of a lid retainer (30).

## Patentansprüche

1. Deckelhalterung (30) zur möglichen Befestigung eines Deckels (15) an einer länglichen Kabelwanne (10), wobei die Kabelwanne einen Basisabschnitt, aufrechte Seiten (13, 14) und Innenflansche (11, 12) hat, wobei die Halterung (30) Folgendes umfasst:
einen Seitenabschnitt (32) und eine lotrecht zu dem genannten Seitenabschnitt (32) einwärts verlaufende Lippe (33),
**dadurch gekennzeichnet, dass**:
die Deckelhalterung (30) mit einem im Wesentlichen flachen Basisabschnitt (31) versehen ist,
der genannte Seitenabschnitt (32) von einem Rand des genannten Basisabschnitts (31) nach oben und im Wesentlichen lotrecht zu dem genannten Basisabschnitt (31) verläuft,
die genannte Lippe (33) von einem oberen Rand des genannten Seitenabschnitts (32) auf der gleichen Seite wie der genannte Basisabschnitt (31) und allgemein parallel zu ihm verläuft,
die Deckelhalterung (30) mit wenigstens einem Halteflansch (34) versehen ist, der sich von einer jeweiligen Position neben dem oberen Rand des Seitenabschnitts (32) in den Winkel zwischen der Lippe (33) und dem Seitenabschnitt (22) erstreckt, und
die Abmessungen und Form des Basisabschnitts (31) und des Seitenabschnitts (32) so sind, dass die Deckelhalterung (30) mit der Kabelwanne (10) in Eingriff ist.

2. Deckelhalterung (30) nach Anspruch 1, bei der die Länge der Deckelhalterung größer als seine Seitenabmessung ist.

3. Deckelhalterung (30) nach Anspruch 1 oder 2, bei der die Lippe (33) in einer Querrichtung schmaler ist als der Basisabschnitt (31).

4. Deckelhalterung (30) nach einem der vorhergehenden Ansprüche, wobei die Halterung einstückig ausgebildet ist.

5. Deckelhalterung (30) nach Anspruch 4, wobei die Halterung durch Schneiden und Formen aus Blech hergestellt ist.

6. Deckelhalterung (30) nach Anspruch 4, wobei die Halterung durch Strangpressen in Endloslänge hergestellt und auf eine gewünschte Länge zugeschnitten wird.

7. Kabelwannenanordnung, umfassend eine längliche Kabelwanne (10), wenigstens eine an der Kabelwanne angebrachte Deckelhalterung (30) nach einem der vorhergehenden Ansprüche und einen Deckel (15), der an wenigstens einer genannten Deckelhalterung angebracht ist und Eingriffsmittel (38) für den Eingriff mit einer Lippe (33) von wenigstens einer genannten Deckelhalterung hat.

8. Anordnung nach Anspruch 7, bei der die bzw. jede genannte Deckelhalterung (30) im Gebrauch mithilfe von einer oder mehreren Schrauben (36), die durch den Basisabschnitt (31) der bzw. jeder Halterung und der Kabelwanne verlaufen, in Solllage an der Kabelwanne (10) befestigt ist.

9. Anordnung nach Anspruch 7 oder 8, bei der der Deckel (15) eine oder mehrere Drehriegel (37) mit einer jeweiligen Zunge (38) zum Drehen in die Solllage unter einer Lippe (33) einer Deckelhalterung (30) aufweist.

## Revendications

1. Dispositif de retenue pour couvercle (30) pour permettre de fixer un couvercle (15) sur une tablette à câbles allongée (10), la tablette à câbles ayant une section de base, des côtés verticaux (13, 14) et des brides de retour (11, 12), le dispositif de retenue (30) comprenant :
une section latérale (32) et une lèvre (33) se prolongeant vers l'intérieur et perpendiculaire à ladite section latérale (32) ;
**caractérisé en ce que** :
le dispositif de retenue pour couvercle (30) est pourvu d'une section de base (31) substantiellement plate ;
ladite section latérale (32) se prolonge vers le haut à partir d'un bord de ladite section de base (31) et substantiellement perpendiculairement à ladite section de base (31) ;
ladite lèvre (33) se prolonge à partir d'un bord supérieur de ladite section latérale (32) sur le même côté que, et généralement parallèle à, ladite section de base (31) ;
le dispositif de retenue pour couvercle (30) est pourvu d'au moins une bride de retenue (34), se prolongeant dans l'angle entre la lèvre (33) et la section latérale (22) à partir d'une position respective adjacente au bord supérieur de la section latérale (32) ; et
les dimensions et la forme de la section de base (31) et section latérale (32) sont telles que le dispositif de retenue pour couvercle (30) se met en prise avec la tablette à câbles (10).

2. Dispositif de retenue pour couvercle (30) selon la revendication 1, où la longueur du dispositif de retenue pour couvercle est supérieure à la dimension latérale de celui-ci.

3. Dispositif de retenue pour couvercle (30) selon la revendication 1 ou 2, où la lèvre (33) est plus étroite que la section de base (31) dans une direction transversale.

4. Dispositif de retenue pour couvercle (30) selon une quelconque des revendications précédentes, où le dispositif de retenue est formé d'une seule pièce.

5. Dispositif de retenue pour couvercle (30) selon la revendication 4, où le dispositif de retenue est formé par découpe et formage à partir de tôle.

6. Dispositif de retenue pour couvercle (30) selon la revendication 4, où le dispositif de retenue est formé en une longueur continue par extrusion et découpé à une longueur désirée.

7. Ensemble tablette à câbles comprenant une tablette à câbles allongée (10), au moins un dispositif de retenue pour couvercle (30) selon une quelconque des revendications précédentes monté sur la tablette à câbles, et un couvercle (15) monté sur au moins un dit dispositif de retenue pour couvercle et ayant des moyens de mise en prise (38) pour mettre en prise une lèvre (33) d'au moins un dit dispositif de retenue pour couvercle.

8. Ensemble selon la revendication 7, où le ou chaque dit dispositif de retenue pour couvercle (30) en utilisation est fixé en place sur la tablette à câbles (10) au moyen d'un ou plusieurs boulons (36) se prolongeant à travers la section de base (31) du ou de chaque dispositif de retenue et la tablette à câbles.

9. Ensemble selon la revendication 7 ou 8, où le couvercle (15) inclut un ou plusieurs tendeurs à lanterne (37) ayant une came respective (38) adaptée afin d'être pivotée en position en dessous d'une lèvre (33) d'un dispositif de retenue pour couvercle (30).
